# EUROPÄISCHE PATENTANMELDUNG

(11) **EP 2 460 980 A2**
(43) Veröffentlichungstag der Anmeldung: **06.06.2012**
(21) Anmeldenummer: 11180493.6
(22) Anmeldetag: 08.09.2011
(51) Int. Cl.: F01D 5/34

(54) **Verfahren zum Herstellen eines integral beschaufelten Rotors**

(30) Priorität: 16.10.2010 DE 102010048732
(71) Anmelder: MTU Aero Engines GmbH, 80995 München (DE)
(72) Erfinder: Schmidt, Robert, 85757 Karlsfeld (DE)

(57) **Zusammenfassung**

Die Erfindung betrifft ein Verfahren zum Herstellen eines integral beschaufelten Rotors, wobei mehrere Laufschaufeln (15) an einem Rotorgrundkörper (10) derart durch Schweißen befestigt werden, dass zunächst in den Rotorgrundkörper (10) radial außen vor der Befestigung der Laufschaufeln (15) sich im wesentlichen in Axialrichtung des Rotorgrundkörpers erstreckende Nuten (11) eingebracht werden, in welche die Laufschaufeln mit ihren Schaufelfüßen (17) oder mit Adaptern eingeführt werden, und dass anschließend die Laufschaufeln mit dem Rotorgrundkörper (10) verschweißt werden, wobei die Nuten (11) derart in den Rotorgrundkörper (10) eingebracht und die Schaufelfüße (17) oder Adapter derart an den Laufschaufeln (15) ausgebildet werden, dass eine Mittelachse der Nuten (11) gegenüber einer Mittelachse der Schaufelfüße (17) oder der Adapter schräggestellt ist, sodass beim Einführen der Laufschaufeln (15) in die Nuten (11) ein Pretwist an den Laufschaufeln ausgebildet wird.

## Beschreibung

Die Erfindung betrifft ein Verfahren zum Herstellen eines integral beschaufelten Rotors nach dem Oberbegriff des Anspruchs 1 bzw. 14.

In Gasturbinen, wie zum Beispiel in Gasturbinenflugtriebwerken, kommen zunehmend als integral beschaufelte Gasturbinenrotoren ausgebildete Rotoren zum Einsatz. Ein integral beschaufelter Rotor verfügt über einen Rotorgrundkörper und über mehrere mit dem Rotorgrundkörper verbundene Laufschaufeln. Abhängig davon, ob ein scheibenförmiger Rotorgrundkörper oder ein ringförmiger Rotorgrundkörper verwendet wird, wird ein integral beschaufelter Rotor auch als blisk (bladed disk) oder bling (bladed ring) bezeichnet.

Aus der DE 103 36 587 A1 ist ein Verfahren zum Herstellen eines integral beschaufelten Rotors bekannt, bei welchem Laufschaufeln auf einem Rotorträger durch ein Schweißverfahren befestigt werden. Dabei kommt nach diesem Stand der Technik als Schweißverfahren Kondensator-Entladungs-Schweißen zum Einsatz.

Aus der US 3 590 454 A ist ein Verfahren zum Herstellen eines integral beschaufelten Rotors bekannt, bei welchem Laufschaufeln auf einem Rotorträger durch ein Schweißverfahren derart befestigt werden, dass zunächst in den Rotorgrundkörper radial außen vor der Befestigung der Laufschaufeln sich im wesentlichen in Axialrichtung des Rotorgrundkörpers erstreckende Nuten eingebracht werden, in welche die Laufschaufeln mit ihren Schaufelfüßen eingeführt werden, und dass anschließend die Laufschaufeln mit dem Rotorgrundkörper verschweißt werden.

Hiervon ausgehend liegt der vorliegenden Erfindung die Aufgabe zu Grunde, ein neuartiges Verfahren zum Herstellen eines integral beschaufelten Rotors zu schaffen.

Diese Aufgabe wird nach einem ersten Aspekt der Erfindung durch ein Verfahren gemäß Anspruch 1 gelöst. Hiernach werden die Nuten derart in den Rotorgrundkörper eingebracht und die Schaufelfüße oder Adapter derart an den Laufschaufeln ausgebildet, dass eine Mittelachse der Nuten gegenüber einer Mittelachse der Schaufelfüße oder der Adapter schräggestellt ist, sodass bei dem vor dem Einführen der Laufschaufeln in die Nuten ein Pretwist an den Laufschaufeln ausgebildet wird. Dies erlaubt eine besonders einfache Fertigung von integral beschaufelten Rotoren innerhalb kürzerer Zeit, mit geringerem Aufwand, mit weniger Fertigungsschritten und unter Reduzierung von Kosten. Es kann auf eine aufwendige Montagevorrichtung verzichtet werden. Es muss kein vorgefertigter Schaufelkranz durch Heften oder Schweißen zum Fügen an den Rotorgrundkörper angefertigt werden.

Nach einer ersten vorteilhaften Weiterbildung des ersten Aspekts der Erfindung erfolgt das Einführen der Schaufelfüße oder Adapter der Laufschaufeln in die Nuten in Axialrichtung des Rotorgrundkörpers, wobei hierzu zunächst die Laufschaufeln unter Ausbildung eines losen Laufschaufelkranzes im Bereich des Rotorgrundkörpers vorpositioniert werden, wobei hierbei die Laufschaufeln radial innen im Bereich der Schaufelfüße oder der Adapter durch den Rotorgrundkörper und radial außen durch eine Vorrichtung geführt werden, und wobei darauffolgend die einzelnen Laufschaufeln nach und nach in Axialrichtung in die Nuten eingeführt werden, sodass beim Einführen der Laufschaufeln in die Nuten automatisch der Pretwist ausgebildet wird.

Nach einer zweiten vorteilhaften Weiterbildung des ersten Aspekts der Erfindung erfolgt das Einführen der Schaufelfüße oder Adapter der Laufschaufeln in die Nuten in Radialrichtung, wobei hierzu zunächst die Laufschaufeln radial innen im Bereich der Schaufelfüße oder der Adapter durch eine Vorrichtung derart verdreht werden, dass die Mittelachse des Schaufelfußes oder des Adapters einer zu montierenden Laufschaufel und die Mittelachse der Nut des Rotorgrundkörpers parallel zueinander verlaufen, und wobei anschließend die jeweilige Laufschaufel in Radialrichtung in die jeweilige Nut eingeführt und sodann von der Vorrichtung freigegeben wird, wodurch der Pretwist vor und bei dem Einführen der Laufschaufel in die jeweilige Nut ausgebildet wird.

Nach einem zweiten Aspekt der Erfindung wird diese Aufgabe durch ein Verfahren gemäß Anspruch 14 gelöst. Hiernach werden anschließend an das Verschweißen der Laufschaufeln mit dem Rotorgrundkörper die Nuten des Rotorgrundkörpers begrenzende Schultern zumindest teilweise entfernt. Hierdurch können als Entlastungsbohrungen wirkende Ausnehmungen zwischen den Laufschaufeln im Bereich der Schaufelfüße oder Adapater ausgebildet werden, die es erlauben den integral beschaufelten Rotor im Betrieb höheren Belastungen auszusetzen.

Die beiden Aspekte können entweder alleine oder in Kombination miteinander zum Einsatz kommen, vorzugsweise bei der Herstellung integral beschaufelter Rotoren mit Außendeckband.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem teilgefertigten, integral beschaufelten Rotor in perspektivischer Ansicht; und
- Fig. 2: einen Ausschnitt aus einem fertigen integral beschaufelten Rotor in perspektivischer Ansicht.

Die hier vorliegende Erfindung betrifft ein Verfahren zum Herstellen eines integral beschaufelten Rotors, insbesondere eines integral beschaufelten Gasturbinenrotors. Ein solcher Rotor verfügt über einen Rotorgrundkörper sowie mehrere Laufschaufeln.

Dann, wenn ein scheibenförmiger Rotorgrundkörper verwendet wird, wird der integral beschaufelte Rotor als blisk (bladed disk) bezeichnet. Dann hingegen, wenn ein ringförmiger Rotorgrundkörper verwendet wird, wird der integral beschaufelte Rotor als bling (bladed ring) bezeichnet.

Zur Herstellung eines erfindungsgemäßen integral beschaufelten Rotors wird so vorgegangen, dass zunächst ein Rotorgrundkörper 10 bereitgestellt wird.

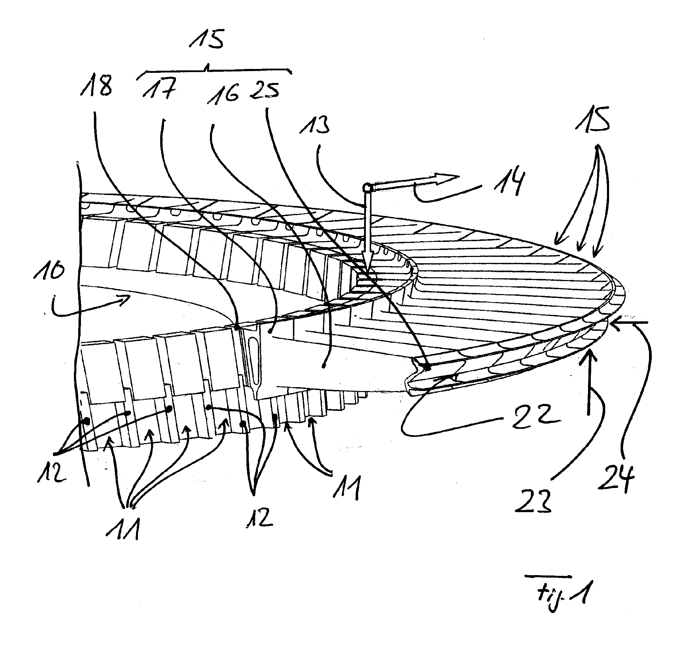

In den Rotorgrundkörper 10 werden radial außen sich im Wesentlichen in Axialrichtung des Rotorgrundkörpers 10 erstreckende Nuten 11 eingebracht. Benachbarte Nuten 11 sind jeweils durch eine Schulter 12, die sich ebenfalls im Wesentlichen in Axialrichtung des Rotorgrundkörpers erstreckt, voneinander begrenzt. Die Axialrichtung des Rotorgrundkörpers 10 ist in Fig. 1 durch einen Pfeil 13 visualisiert. Ein weiterer Pfeil 14 visualisiert die Radialrichtung des Rotorgrundkörpers 10.

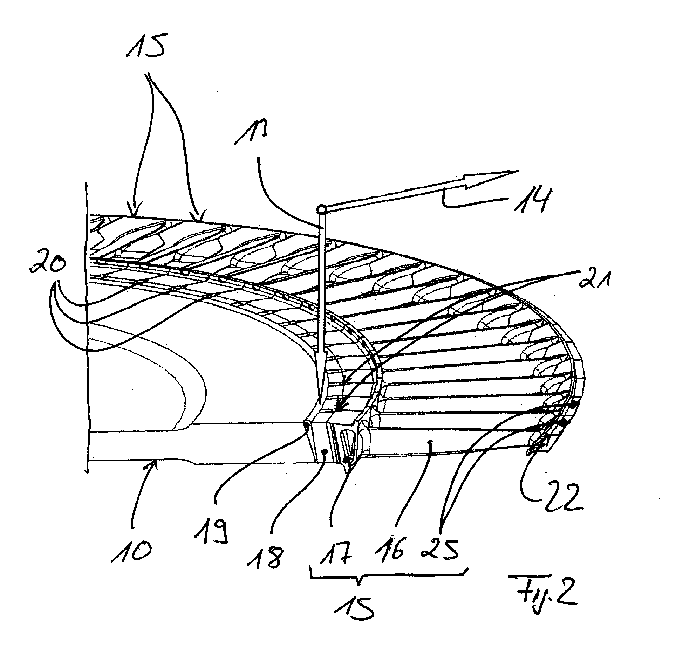

Neben dem Rotorgrundkörper 10 mit seinen durch die Schultern 12 voneinander begrenzten Nuten 11 werden Laufschaufeln 15 bereitgestellt. Die Laufschaufeln 15 verfügen über ein Schaufelblatt 16 und einen Schaufelfuß 17. Weiterhin verfügen die Laufschaufeln 15 gemäß Fig. 1 und 2 über Außendeckbandsegmente 25, die ein Außendeckband 22 des herzustellenden Rotors bilden.

Im gezeigten Ausführungsbeispiel ist am Schaufelfuß 17 jeder Laufschaufel 15 ein Adapter 18 befestigt, über den die jeweilige Laufschaufel 15 in eine Nut 11 im Rotorgrundkörper 10 eingeführt werden kann. Es sei darauf hingewiesen, dass in Fig. 1 einige Adapter 18 ohne Laufschaufeln 15 gezeigt sind, um eine übersichtlichere Darstellung zu gewährleisten. Mit diesen Adaptern 18 sind jedoch Laufschaufeln 15 über ihre Schaufelfüße 17 verbunden. Die Adapter können die Schaufelfüße auch ersetzen.

Die sich im Wesentlichen in Axialrichtung 13 des Rotorgrundkörpers 10 erstreckende Nuten 11 sind, wie bereits erwähnt, durch Schultern 12 voneinander begrenzt. Die Nuten 11 sind gegenüber der Axialrichtung 13 des Rotorgrundkörpers schräg gestellt, sodass demnach die Mittelachsen der Nuten 11 nicht parallel zur Axialrichtung 13 des Rotorgrundkörpers 10 verlaufen, sondern vielmehr mit der Axialrichtung einen ersten Winkel einschließen. Dieser erste Winkel beträgt vorzugsweise bis zu 20°, insbesondere bis zu 15°.

Ferner sind die Adapter 18 sowie die Außendeckbandsegmente 25 derart an den Laufschaufeln 15 ausgebildet, dass dieselben jeweils gegenüber der Axialrichtung 13 des Rotorgrundkörpers 10 schräg gestellt, sodass demnach Mittelachsen der Adapter 18 und Mittelachsen der Außendeckbandsegmente 25 nicht parallel zur Axialrichtung 13 des Rotorgrundkörpers 10 verlaufen.

Dabei schließen die Mittelachsen der Außendeckbandsegmente 25 mit der Axialrichtung den ersten Winkel ein, also den gleichen ersten Winkel wie die Mittelachsen der Nuten 11.

Die Mittelachsen der Adapter 18 sind hingegen gegenüber der Axialrichtung 13 des Rotorgrundkörpers 10 um einen vom ersten Winkel abweichenden zweiten Winkel schräggestellt, wobei eine Abweichung zwischen dem ersten Winkel und dem zweiten Winkel vorzugsweise zwischen 1° und 5° beträgt.

Daraus folgt, dass die Mittelachsen der Nuten 11 gegenüber den Mittelachsen der Adapter 18 schräggestellt sind. Weiterhin sind die Mittelachsen der Außendeckbandsegmente 25 gegenüber den Mittelachsen der Adapter 18 schräggestellt. Die Mittelachsen der Nuten 11 und die Mittelachsen der Außendeckbandsegmente 25 sind hingegen nicht zueinender schräggestellt, vielmehr verlaufen dieselben parallel zueinander.

Dann, wenn solche Laufschaufeln 15 in solche Nuten 11 eingeführt werden, wird bei dem Einführen und/oder vor dem Einführen der Laufschaufeln 15 in die Nuten 11 ein Pretwist an den Laufschaufeln 15 ausgebildet.

Anschließend an das Einfügen der Laufschaufeln 15 über die Adapter 18 in die Nuten 11 des Rotorgrundkörpers 10 werden die Laufschaufeln 15 mit dem Rotorgrundkörper 10 verschweißt, nämlich vorzugsweise durch Elektronenstrahlschweißen, welches auch als EB-Schweißen bezeichnet wird.

Nach einer ersten vorteilhaften Weiterbildung der Erfindung erfolgt das Einführen der Adapter 18 der Laufschaufeln 15 in die Nuten 11 in Axialrichtung des Rotorgrundkörpers 10, wobei hierzu zunächst die Laufschaufeln 15 unter Ausbildung eines losen Laufschaufelkranzes im Bereich des Rotorgrundkörpers 10 vorpositioniert werden. Hierbei werden die Laufschaufeln radial innen im Bereich der Schaufelfüße 17 oder der Adapter 18 durch den Rotorgrundkörper 10 und radial außen durch eine nicht gezeigte Vorrichtung gestützt bzw. geführt, wobei darauffolgend die einzelnen Laufschaufeln nach und nach in Axialrichtung in die Nuten 11 eingeführt werden, sodass beim Einführen der Laufschaufeln 15 in die Nuten 11 automatisch der Pretwist ausgebildet wird.

Der Rotorgrundkörper 10 ist beim Einführen der Laufschaufeln 15 mit ihren Schaufelfüßen 17 oder mit den an den Schaufelfüßen 17 befestigten Adaptern 18 in die Nuten 11 des Rotorgrundkörpers 10 vorzugsweise horizontal ausgerichtet, nämlich derart, dass die Laufschaufeln 15 mit ihren Schaufelfüßen 17 oder mit den an den Schaufelfüßen 17 befestigten Adapter 18 von oben in die Nuten 11 eingeführt werden. Fig. 1 und 2 zeigen diese horizontale Ausrichtung des Rotorgrundkörpers 10. Sie Axialrichtung 13 des Rotorgrundkörpers 10 verläuft vertikal und die Radialrichtung 14 desselben horizontal.

Vorzugsweise werden zunächst die Laufschaufeln 15 auf den Rotorgrundkörper 10 vorzugsweise unter Ausbildung eines losen Schaufelkranzes von oben aufgesetzt, wobei darauffolgend die einzelnen Laufschaufeln 15 nach und nach in die Nuten 11 des Rotorgrundkörpers 10 eingeführt werden. Die Laufschaufeln 15 werden hierbei vorzugsweise in die Nuten 11 des Rotorgrundkörpers 10 mit leichten Hammerschlägen oder auf sonstige Art und weise eingeschlagen, wobei sich hierbei automatisch der Pretwist an den Laufschaufeln 15 ausbildet.

Bei dem obigen Einführen der Laufschaufeln 15 mit ihren Schaufelfüßen 17 oder mit den an den Schaufelfüßen 17 befestigten Adaptern 18 in die Nuten 11 des Rotorgrundkörpers 10 werden die Laufschaufeln 15 radial außen seitlich und von unten fixiert bzw. geführt, und zwar in den durch die Pfeile 23 und 24 der Fig. 1 angedeuteten Abstützrichtungen.

Hierzu kann eine geeignete, nicht gezeigte Vorrichtung zum Einsatz kommen, wobei der Rotorgrundkörper 10 radial innen selbst als Abstützvorrichtung fungiert.

Vorzugsweise sind die Nuten 11 des Rotorgrundkörpers 10 in Axialrichtung 13 gesehen konisch konturiert, nämlich derart, dass sich dieselben in Einführrichtung der Laufschaufeln 15 gesehen verjüngen. Hierzu verfügen die Schultern 12 an dem axialen Ende des Rotorgrundkörpers 10, von welchen ausgehend die Laufschaufeln 15 in die Nuten 11 eingeschoben werden, über eine geringere Dicke als am gegenüberliegenden axialen Ende des Rotorgrundkörpers 10. Durch das Einführen der Laufschaufeln 15 mit ihren Adaptern 18 in die konisch konturierten Nuten 11 werden die Laufschaufeln 15 bereits beim Einführen in die Nuten 11 in gewissem Umfang fixiert. Zusätzlich oder alternativ können auch die Adapter 18 eine solche konische Konturierung aufweisen.

Nach einer zweiten, alternativen vorteilhaften Weiterbildung der Erfindung erfolgt das Einführen der Laufschaufeln15 in die Nuten 11 in Radialrichtung des Rotorgrundkörpers 10, wobei hierzu zunächst die Laufschaufeln 15 radial innen im Bereich der Schaufelfüße 17 oder der Adapter 18 durch eine nicht gezeigte Vorrichtung derart verdreht werden, dass die Mittelachse des Schaufelfußes 17 oder Adapters 18 einer zu montierenden Laufschaufel 15 und die Mittelachse der jeweiligen Nut 11, in welche die Laufschaufel mit dem Adapter 18 einzuführen ist, parallel zueinander verlaufen, und wobei anschließend die jeweilige Laufschaufel 15 in Radialrichtung in die jeweilige Nut 11 eingeführt und sodann von der Vorrichtung freigegeben wird, wodurch der Pretwist vor und bei dem Einführen der Laufschaufel in die jeweilige Nut ausgebildet wird. Die nicht gezeigte Vorrichtung verdreht hierbei die zu montierenden Laufschaufel 15 am Adapter 18 um den Betrag, um den der erste Winkel und der zweite Winkel voneinander abweichen, sodass nach dem Verdrehen die jeweilige Laufschaufel 15 mit ihrem Adapter 18 in Radialrichtung in die jeweilige Nut 11 des Rotorgrundkörpers 10 einsetzbar ist.

Das Einführen der Laufschaufeln 15 in die Nuten 11 bestimmt deren Ausrichtung in axialer und radialer Richtung.

Nach einer bevorzugten Weiterbildung der Erfindung werden zunächst alle Laufschaufeln 15 über die an den Schaufelfüßen 17 derselben befestigten Adapter 18 in die Nuten 11 des Rotorgrundkörpers 10 eingeführt. Nachdem alle Laufschaufeln 15 so am Rotorgrundkörper 10 vormontiert sind, werden anschließend alle Laufschaufeln 15 über mindestens eine in Umfangsrichtung des Rotorgrundkörpers 10 umlaufende Schweißnaht 19 mit dem Rotorgrundkörper 10 verschweißt.

Wie Fig. 2 entnommen werden kann, ist die in Umfangsrichtung des Rotorgrundkörpers 10 umlaufende Schweißnaht 19 an dem axialen Ende des Rotorgrundkörpers 10 ausgebildet, von welchem aus die Laufschaufeln 15 bei dem Einführen in Axialrichtung über die Adapter 18 in die Nuten 11 des Rotorgrundkörpers 10 eingeschoben sind. Eine derartige, in Umfangsrichtung umlaufende Schweißnaht kann zusätzlich oder alternativ auch am gegenüberliegenden axialen Ende des Rotorgrundkörpers 10 ausgebildet sein.

Mithilfe der oder jeder umlaufenden Schweißnaht 19 werden im gezeigten Ausführungsbeispiel die Laufschaufeln 10 derart mit dem Rotorgrundkörper 10 verschweißt, dass ein Verschweißen des Rotorgrundkörpers 10 mit den Adaptern 18 erfolgt, die mit den Schaufelfüßen 17 der Laufschaufeln 15 verbunden sind. Die oder jede umlaufende Schweißnaht 19 erstreckt sich dabei entlang eines Nutgrunds der Nuten 11 und entlang einer sich an den Nutgrund der Nuten 11 angrenzenden, radial inneren Begrenzung der an den Schaufelfüßen 17 befestigten Adaptern 18.

Zusätzlich zu der oder jeder umlaufenden Schweißnaht 19 ist es möglich, die Laufschaufeln 15 mit ihren an den Schaufelfüßen 17 befestigten Adaptern 18 mit dem Rotorgrundkörper 10 über sich in Radialrichtung 14 des Rotorgrundkörpers 10 erstreckende weitere Schweißnähte 20 zu verbinden bzw. zu verschweißen. Die sich in Radialrichtung 14 erstreckenden Schweißnähte 20 sind dann entlang von Seitenwänden der Nuten bzw. Seitenwänden der Schultern 12 und entlang von sich an diese Seitenwände angrenzenden, seitlichen Begrenzungen der an den Schaufelfüßen 17 befestigten Adaptern 18 ausgebildet.

An dieser Stelle sei darauf hingewiesen, dass die sich in Radialrichtung 14 erstreckenden Schweißnähte 20 optional sind. Es ist möglich, ausschließlich mindestens eine sich in Umfangsrichtung erstreckende Schweißnaht 19 vorzusehen.

Nach einer bevorzugten Weiterbildung des erfindungsgemäßen Verfahrens werden anschließend an das Verschweißen der Laufschaufeln 15 mit dem Rotorgrundkörper 10 die Schultern 12, welche die benachbarten Nuten 11 des Rotorgrundkörpers 10 voneinander begrenzen, zumindest teilweise entfernt. Dies erfolgt vorzugsweise dadurch, dass jede zwischen zwei benachbarten Nuten 11 positionierte, sich im Wesentlichen in Axialrichtung des Rotorgrundkörpers 10 erstreckende Schulter 12 durch eine Bohrung, die auch als Entlastungsbohrung bezeichnet werden kann, zumindest teilweise entfernt wird. Jede dieser Bohrungen erstreckt sich dabei entlang der jeweiligen zu entfernenden Schulter 12 im Wesentlichen in Axialrichtung des Rotorgrundkörpers 10.

Entlang dieser Richtung wird die jeweilige Bohrung in den integral beschaufelten Gasturbinenrotor, der aus dem Rotorgrundkörper 10 und den mit demselben verschweißten Laufschaufeln 15 gebildet ist, eingebracht. Entlastungsbohrungen 21 sind in Fig. 1 schematisiert dargestellt. Über die Entlastungsbohrungen 21 ist es möglich die Schultern 12 vollständig oder auch nur teilweise zu entfernen. Das vollständige Entfernen der Schultern 12 ist bevorzugt.

Im Unterschied zum oben beschriebenen, bevorzugten Ausführungsbeispiel der Erfindung ist es auch möglich, bei der Herstellung des integral beschaufelten Gasturbinenrotors zunächst eine erste Laufschaufel 15 über einen dem Schaufelfuß 17 derselben zugeordneten Adapter 18 in eine erste Nut 11 einzubringen und sodann diese Laufschaufel 15 über eine sich im Wesentlichen in Axialrichtung 13 erstreckende Schweißnaht mit dem Rotorgrundkörper 10 zu verschweißen, wobei diese sich in Axialrichtung 13 erstreckende Schweißnaht in Axialrichtung des Rotorgrundkörpers 10 gesehen zwischen einer Schulter 12 der jeweiligen Nut und dem Adapter 18 der jeweiligen Laufschaufel 15 ausgebildet wird.

Anschließend an diese erste Laufschaufel 15 werden dann sukzessive bzw. nachfolgend weitere Laufschaufeln 15 in entsprechende Nuten 11 eingeführt und mit dem Rotorgrundkörper 10 durch sich im Wesentlichen in Axialrichtung 13 erstreckende Schweißnähte verbunden.

Zusätzlich ist es dann möglich, mindestens eine sich in Umfangsrichtung erstreckende Schweißnaht 19 und/oder sich in Radialrichtung 14 erstreckende Schweißnähte 20 vorzusehen.

Wie bereits ausgeführt, werden im bevorzugten Ausführungsbeispiel der Erfindung an die Schaufelfüße 17 der Laufschaufeln 15 die Adapter 18 gefügt, über welche die Laufschaufeln 15 in die Nuten 11 des Rotorgrundkörpers 10 eingeführt werden und im Bereich derer die Schweißnähte 19 bzw. 20 ausgebildet werden. Dies ist dann von Vorteil, wenn der Schaufelfuß 17 der Laufschaufel 15 aus einem nicht schweißgeeigneten Werkstoff gefertigt ist. In diesem Fall kann dann an den Schaufelfuß 17 der Laufschaufel 15 ein Adapter 18 aus einem schweißgeeigneten Werkstoff gefügt werden.

Sollte jedoch die Laufschaufel 15, insbesondere der Schaufelfuß 17 derselben, aus einem schweißgeeigneten Werkstoff bestehen, so kann auf die Adapter 18 auch verzichtet werden, wobei dann die Laufschaufeln 15 unmittelbar über ihre Schaufelfüße 17 in die Nuten 11 des Rotorgrundkörpers 10 eingeschoben und mit demselben verschweißt werden.

Die Laufschaufeln 15 sind vorzugsweise mit einer Verschleißschutzschicht fertig beschichtet.

## Patentansprüche

1. Verfahren zum Herstellen eines integral beschaufelten Rotors, wobei mehrere Laufschaufeln an einem Rotorgrundkörper derart durch Schweißen befestigt werden, dass zunächst in den Rotorgrundkörper radial außen vor der Befestigung der Laufschaufeln sich im wesentlichen in Axialrichtung des Rotorgrundkörpers erstreckende Nuten eingebracht werden, in welche die Laufschaufeln mit ihren Schaufelfüßen oder mit Adaptern eingeführt werden, und dass anschließend die Laufschaufeln mit dem Rotorgrundkörper verschweißt werden, **dadurch gekennzeichnet, dass** die Nuten derart in den Rotorgrundkörper eingebracht und die Schaufelfüße oder Adapter derart an den Laufschaufeln ausgebildet werden, dass eine Mittelachse der Nuten gegenüber einer Mittelachse der Schaufelfüße oder der Adapter schräggestellt ist, sodass bei dem Einführen der Laufschaufeln in die Nuten ein Pretwist an den Laufschaufeln ausgebildet wird.

2. Verfahren nach Anspruch 1, **dadurch gekennzeichnet, dass** ein integral beschaufelter Rotor mit Außendeckband hergestellt wird, wobei die Nuten derart in den Rotorgrundkörper eingebracht und die Schaufelfüße oder Adapter sowie Außendeckbandsegmente derart an den Laufschaufeln ausgebildet werden, dass die Mittelachsen der Nuten gegenüber den Mittelachsen der Schaufelfüße oder der Adapter schräggestellt sind, und dass die Mittelachsen der Nuten und Mittelachsen der Außendeckbandsegmente parallel zueinander verlaufen.

3. Verfahren nach Anspruch 2, **dadurch gekennzeichnet, dass** die Nuten des Rotorgrundkörpers und die Außendeckbandsegmente der Laufschaufeln derart ausgebildet werden, dass dieselben gegenüber einer Axialrichtung des Rotorgrundkörpers um einen gleichen, ersten Winkel schräggestellt sind, und dass die Schaufelfüße oder Adapter der Laufschaufeln derart ausgebildet werden, dass dieselben gegenüber der Axialrichtung des Rotorgrundkörpers um einen vom ersten Winkel abweichenden zweiten Winkel schräggestellt sind.

4. Verfahren nach einem der Ansprüche 1 bis 3, **dadurch gekennzeichnet, dass** die Laufschaufeln mit ihren Schaufelfüßen oder mit den Adaptern derart in die Nuten eingeführt werden, dass zunächst die Laufschaufeln unter Ausbildung eines losen Laufschaufelkranzes im Bereich des Rotorgrundkörpers vorpositioniert werden, wobei hierbei die Laufschaufeln radial innen im Bereich der Schaufelfüße oder der Adapter durch den Rotorgrundkörper und radial außen durch eine Vorrichtung geführt werden, und dass darauffolgend die einzelnen Laufschaufeln nach und nach in Axialrichtung in die Nuten eingeführt, insbesondere eingeschlagen, werden, sodass beim Einführen der Laufschaufeln in die Nuten der Pretwist an den Laufschaufeln ausgebildet wird.

5. Verfahren nach Anspruch 4, **dadurch gekennzeichnet, dass** hierbei der Rotorgrundkörper derart horizontal ausgerichtet ist, dass die Axialrichtung des Rotorgrundkörpers vertikal und die Radialrichtung desselben horizontal verläuft, wobei die Laufschaufeln mit ihren Schaufelfuß oder Adapter von oben in die Nuten eingeführt werden.

6. Verfahren nach einem der Ansprüche 1 bis 3, **dadurch gekennzeichnet, dass** die Laufschaufeln mit ihren Schaufelfüßen oder mit den Adaptern derart in die Nuten eingeführt werden, dass zunächst die Laufschaufeln radial innen im Bereich der Schaufelfüße oder der Adapter durch eine Vorrichtung derart verdreht werden, dass die Mittelachse des Schaufelfußes oder des Adapters einer zu montierenden Laufschaufel und die Mittelachse der Nut des Rotorgrundkörpers parallel zueinander verlaufen, und dass anschließend die jeweilige Laufschaufel in Radialrichtung in die jeweilige Nut eingeführt und sodann von der Vorrichtung freigegeben wird, wodurch der Pretwist an den Laufschaufeln vor und bei dem Einführen der Laufschaufel in die jeweilige Nut ausgebildet wird.

7. Verfahren nach einem der Ansprüche 1 bis 6, **dadurch gekennzeichnet, dass** zunächst alle Laufschaufeln mit ihren Schaufelfüßen oder mit ihren Adaptern in die Nuten des Rotorgrundkörpers eingeführt werden, und dass anschließend alle Laufschaufeln über mindestens eine in Umfangrichtung des Rotorgrundkörpers umlaufende Schweißnaht mit dem Rotorgrundkörper verschweißt werden.

8. Verfahren nach Anspruch 7, **dadurch gekennzeichnet, dass** über die oder jede umlaufende Schweißnaht entweder die Schaufelfüße der Laufschaufeln mit dem Rotorgrundkörper oder die Adapter mit dem Rotorgrundkörper verbunden werden, wobei sich die oder jede umlaufende Schweißnaht vorzugsweise entlang eines Nutgrunds der Nuten und entlang einer sich an den Nutgrund der Nuten angrenzenden, radial inneren Begrenzung der Schaufelfüße oder der Adapter erstreckt.

9. Verfahren nach Anspruch 7 oder 8, **dadurch gekennzeichnet, dass** zusätzlich zu der oder jeder umlaufenden Schweißnaht die Laufschaufeln mit ihren Schaufelfüßen oder mit ihren Adaptern mit dem Rotorgrundkörper über sich in Radialrichtung des Rotorgrundkörpers erstreckende Schweißnähte verschweißt werden, wobei sich die radialen Schweißnähte vorzugsweise entlang von Seitenwänden der Nuten und entlang von sich an die Seitenwände der Nuten angrenzenden, seitlichen Begrenzung der Schaufelfüße oder der Adapter erstrecken.

10. Verfahren nach einem der Ansprüche 1 bis 6, **dadurch gekennzeichnet, dass** zunächst eine erste Laufschaufeln mit ihrem Schaufelfuß oder mit ihrem Adapter in eine Nut des Rotorgrundkörper eingeführt wird, dass anschließend die erste Laufschaufeln über mindestens eine in Axialrichtung des Rotorgrundkörpers verlaufende Schweißnaht mit dem Rotorgrundkörper verschweißt wird, und dass darauffolgend jede weitere Laufschaufel auf diese Art und Weise mit dem Rotorgrundkörper verbunden wird.

11. Verfahren nach Anspruch 9, **dadurch gekennzeichnet, dass** zusätzlich die Laufschaufeln mit dem Rotorgrundkörper über mindestens eine in Umfangrichtung des Rotorgrundkörpers umlaufende Schweißnaht und/oder über sich in Radialrichtung des Rotorgrundkörpers erstreckende Schweißnähte verschweißt werden.

12. Verfahren nach einem der Ansprüche 1 bis 11, **dadurch gekennzeichnet, dass** die Nuten des Rotorgrundkörpers und/oder die Schaufelfüße oder die Adapter der Laufschaufeln in Axialrichtung des Rotorgrundkörpers konisch konturiert sind.

13. Verfahren nach einem der Ansprüche 1 bis 12, **gekennzeichnet durch** Merkmale nach einem der Ansprüche 14 bis 15.

14. Verfahren zum Herstellen eines integral beschaufelten Rotors, wobei mehrere Laufschaufeln an einem Rotorgrundkörper derart durch Schweißen befestigt werden, dass zunächst in den Rotorgrundkörper radial außen vor der Befestigung der Laufschaufeln sich im wesentlichen in Axialrichtung des Rotorgrundkörpers erstreckende Nuten eingebracht werden, in welche die Laufschaufeln mit ihren Schaufelfüßen oder mit an den Schaufelfüßen befestigten Adaptern eingeführt werden, und dass anschließend die Laufschaufeln mit dem Rotorgrundkörper verschweißt werden, **dadurch gekennzeichnet, dass** anschließend an das Verschweißen der Laufschaufeln mit dem Rotorgrundkörper die Nuten des Rotorgrundkörpers begrenzende Schultern zumindest teilweise entfernt werden.

15. Verfahren nach Anspruch 14, **dadurch gekennzeichnet, dass** jede zwischen zwei benachbarten Nuten positionierte, sich im wesentlichen in Axialrichtung des Rotorgrundkörpers erstreckende Schulter durch eine Bohrung zumindest teilweise entfernt wird, die entlang der jeweiligen zu entfernenden Schulter in den integral beschaufelten Gasturbinenrotor aus dem Rotorgrundkörper und den mit demselben verschweißten Laufschaufeln eingebracht wird.

16. Verfahren nach Anspruch 14 oder 15, **gekennzeichnet durch** Merkmale nach einem der Ansprüche 1 bis 12.
